# EUROPÄISCHE PATENTANMELDUNG

(11) **EP 3 292 989 A1**
(43) Veröffentlichungstag der Anmeldung: **14.03.2018**
(21) Anmeldenummer: 16020327.9
(22) Anmeldetag: 12.09.2016
(51) Int. Cl.: B29C 67/00, B33Y 10/00, B33Y 30/00, B22F 3/105

(54) **VERFAHREN ZUM GENERATIVEN FERTIGEN VON BAUTEILEN**

(71) Anmelder: Linde Aktiengesellschaft, 80331 München (DE)
(72) Erfinder: Scholz, Jürgen, 81379 München (DE); Miklos, Ernst, 85551 Kirchheim (DE); Fieret, Jim, Bell Hill, Hook Norton OX15 5PS (GB); Foret, Pierre, 80796 München (DE)
(74) Vertreter: Gellner, Bernd

(57) **Zusammenfassung**

Ein Verfahren zum generativen Fertigen von Bauteilen aus pulverförmigen Materialien, insbesondere Metall-, Keramik- oder Kunststoffpulvern, wobei auf ein Pulverbett mit einem energiereichen Strahl das Pulverbett zumindest teilbereichsweise aufschmelzend eingewirkt wird, wobei nach dem Aufschmelzen des Pulverbetts einer erste Schicht eine zweite Pulverschicht aufgebracht und diese ebenfalls zu mindestens teilbereichsweise aufgeschmolzen wird, wobei der Zyklus wiederholt wird, bis eine Anzahl gewünschter Schichten umgeschmolzen ist, insbesondere Verfahren zum selektiven Laserschmelzen von pulverförmigen Werkstoffen, dadurch gekennzeichnet, dass beim Einfüllen und/oder Einschütten einer nächsten Pulverschicht und/oder beim Einwirken des energiereichen Strahls auf das Pulverbett, das Pulverbett mit Ultraschallschwingungen beaufschlagt wird.

## Beschreibung

Die vorliegende Erfindung betrifft ein Verfahren zum generativen Herstellen von Bauteilen nach dem Oberbegriff des Anspruchs 1. Insbesondere betrifft das Verfahren das Laserstrahlgenerieren im Pulverbett, auch selektives Laserschmelzen genannt.

Das selektive Laserschmelzen ist eines einer Mehrzahl von generativen Fertigungsverfahren, die allesamt zur Gruppe der Strahlschmelzverfahren gerechnet werden.

Bei diesem Verfahren wird der zu verarbeitende Werkstoff in Pulverform in einer dünnen Schicht auf einer Grundplatte aufgebracht. Hierbei wird der pulverförmige Werkstoff vollflächig und möglichst gleichmäßig aufgebracht und anschließend insbesondere teilbereichsweise auf das Pulverbett mit einem Laserstrahl derart eingewirkt, dass das pulverförmige Material vollständig umgeschmolzen wird und nach dem Erstarren eine feste Materialschicht ergibt. Hierbei folgt das Erschmelzen selbstverständlich einer gewünschten Kontur eines herzustellenden Bauteiles, wobei dies bedeutet, dass Teile des Pulverbetts umgeschmolzen werden und andere Teile des Pulverbetts nicht umgeschmolzen werden. Nachdem in dieser Weise eine erste Schicht von typischerweise 15 bis 150 µm Dicke umgeschmolzen ist, wird die Grundplatte um den Betrag einer Schichtdicke abgesenkt und erneut Pulver aufgetragen. Das Auftragen des Pulvers erfolgt hierbei ebenfalls erneut möglichst gleichmäßig mit Rakeln oder Rollen oder Abstreifern, wobei das Pulver zunächst auf das vorhandene Pulverbett aufgeschüttet wird. Anschließend wird diese zweite Schicht lokal umgeschmolzen, wobei sich die umgeschmolzenen Schichten mit den darunter liegenden umgeschmolzenen Schichten entsprechend verbinden. Dieser Zyklus wird solange wiederholt, bis alle Schichten umgeschmolzen sind. Das fertige Bauteil wird anschließend von überschüssigem Pulver gereinigt und entsprechend bearbeitet oder verwendet.

Die Daten für die Führung des Laserstrahls werden über ein CAD-System erzeugt. Die Kontaminierung des pulverförmigen Materials und des hergestellten Bauteils mit Sauerstoff zu vermeiden, findet der Prozess unter Schutzgasatmosphäre statt.

Das selektive Laserschmelzen ergibt Bauteile, die vergleichsweise hohe Bauteildichten besitzen, so dass die mechanischen Eigenschaften des generativ hergestellten Bauteils an die Eigenschaften anderer Bauteile herankommen, die aus dem Grundwerkstoff beispielsweise mittels klassischer Verfahren, wie Fräsen, Schmieden oder dergleichen herausgearbeitet sind.

Beim selektiven Laserschmelzen ist von Vorteil, dass keine Form oder Stützstruktur notwendig ist, da insbesondere die vorhandenen Pulverbetten oder das schichtweise aufgebrachte Pulverbett das zu erstellende Werkstück gleichzeitig auch stützt.

Die verwendeten Materialien sind insbesondere Kunststoffe, Keramiken, aber auch Metallpulver, wobei die Metallpulver aus Edel- und Werkzeugstählen ausgebildet sein können. Ferner sind Leichtmetalllegierungen und Leichtmetalle sowie Chrom-Kobalt-Molybdänlegierungen, Bronzelegierungen, Nickelbasislegierungen und Kupferlegierungen in Pulverform verarbeitbar.

Derartige Pulverwerkstoffe werden üblicherweise durch so genanntes Verdüsen erzeugt.

Bei der Verdüsung wird geschmolzenes Metall in kleine Tröpfchen zerteilt und rasch erstarrt, bevor die Schmelzetröpfchen in Kontakt miteinander oder mit einer festen Oberfläche kommen. Das Prinzip dieses Verfahrens beruht auf der Zerteilung eines dünnen, flüssigen Metallstrahls durch einen mit hoher Geschwindigkeit auftreffenden Gas- oder Flüssigkeitsstrom. Luft, Stickstoff und Argon sind die meistgenutzten Gase, als Flüssigkeit wird vor allem Wasser eingesetzt.

Auch andere Verfahren zur Schmelzezerteilung finden zunehmend Anwendung, wie z.B. die Zentrifugalverdüsung, bei der Schmelzetröpfchen von einer rotierenden Quelle weggeschleudert werden.

Während die Wasserverdüsung insbesondere für die Herstellung von Pulvern aus Eisen, Stahl, Kupfer und Kupferlegierungen eingesetzt wird erfolgt die Verdüsung von Aluminium und Zink überwiegend, die von Kupfer teilweise unter Luft.

Für die Druckluftverdüsung wird zunächst eine Schmelze des zu verdüsenden Metalls oder der zu verdüsenden Legierung aufgebaut und entsprechend überhitzt. Diese überhitzte Schmelze läuft meist über einen zweiten kleineren Tiegel oder einen Eingießtrichter und bildet dort einen Schmelzestrahl aus, der senkrecht durch eine Düsenkonstruktion fällt. Der Schmelzestrahl wird durch ein Gas (Trägergas) zerstäubt und die entstehenden Tröpfchen erstarren in einer Verdüsungskammer in der Bewegung. In der Verdüsungskammer und/oder in nachgeschalteten Gasreinigungsanleitung (Zyklone, Filter) wird das Metallpulver vom Trägergas getrennt.

Bei der industriellen Stahlpulvergewinnung durch Wasserverdüsung werden bevorzugt niedriggekohlte, im LD-Verfahren hergestellte, Stahlschmelzen verwendet. Eine weitere Möglichkeit zur Stahlpulvergewinnung besteht darin, sortierten Schrott zu verwenden und diesen in einem Lichtbogenofen zu schmelzen.

Hochreine Pulver aus Sonderstahl, Superlegierungen und anderen hochlegierten bzw. oxidationsempfindlichen Werkstoffen lassen sich vorteilhaft durch Verdüsung mit Inertgas herstellen. Dieses Verfahren liefert meist kugelförmige Pulver, die für das konventionelle mechanische Pressen von Formteilen kaum, für eine Verarbeitung durch isostatisches Pressen und Pulverspritzgießen hervorragend geeignet sind.

Großtechnisch wird häufig das ASEA-STORA-Verfahren zur Verdüsung von Schnellarbeitsstahlschmelzen angewendet. Durch Verwendung von gereinigtem Inertgas, wie z.B. N₂ und Ar, und Arbeiten in einer geschlossenen Anlage lassen sich Pulver mit in etwa 100 ppm Sauerstoff erzeugen. Zur Erhöhung der Abkühlgeschwindigkeit der Metalltröpfchen wird die Verdüsungskammer von außen gekühlt und für das Sammeln der Pulver ein wassergekühlter Boden verwendet.

Ein anderes Verfahren umfasst die Verdüsung mit Gasen in einer Laval-Düse nach NANOVAL. Für die Erzeugung reiner kugeliger Metallpulver aus reaktiven Metallen wie Titan oder Zirkonium sind Verfahren vorteilhaft, die den Kontakt des schmelzflüssigen Metalls mit keramischem Tiegelmaterial nicht zulassen, da dies zu einer Oxidation der Schmelze und möglicherweise zur Zerstörung des Tiegels führen könnte. Daher erschmilzt man das reaktive Metall induktiv oder mittels Plasma in einem gekühlten Kupfertiegel. Zwischen Kupfertiegel und Schmelze bildet sich eine dünne erstarrte Schicht des zu verdüsenden Metalls, welche eine Reaktion der Schmelze mit dem Tiegelmaterial wirkungsvoll verhindert.

Eine andere Möglichkeit der keramikfreien Metallverdüsung, die sich besonders für reaktive Werkstoffe eignet und z. B. in der Herstellung von Titanpulver Verwendung findet, stellt das EIGA-Verfahren dar. Bei diesem Verfahren wird das zu verdüsende Metall bzw. die zu verdüsende Legierung als Elektrode in Stangenform senkrecht einer ringförmigen Induktionsspule zugeführt und hier oberflächlich aufgeschmolzen. Um ein gleichförmiges Anschmelzen zu gewährleisten, unterliegt die Stange während des Verfahrens einer Drehbewegung. Die so erzeugte Schmelze tropft schließlich im freien Fall durch eine Ringdüse, wird hier zerstäubt und erstarrt. Anschließend wird das Pulver in einen Verdüsungsbehälter abgeschieden.

Ebenfalls für die Herstellung reiner sphärischer Titan- und Titan-Legierungspulver wird die Plasma-Verdüsung verwendet. Ein aus der zu verdüsenden Legierung gefertigter Draht von ca. 3 mm Durchmesser wird einer Anordnung von drei Plasmabrennern zugeführt, wo er in einem Schritt geschmolzen und zerstäubt wird. Durch die Reinheit des Ausgangsmaterials, das Fehlen jeglichen Tiegelmaterials und das Schmelzen unter inerter Atmosphäre erhält man ein Endprodukt höchster Reinheit.

Eine Zerteilung von Schmelzen unter Vakuum, die man vom Prinzip her auch der Verdüsung zuordnen muss, ist mit Hilfe von Edelgasen oder Wasserstoff möglich. Die unter Druck mit dem Gas angereicherte Schmelze wird in dünnem Strahl in eine evakuierte Kammer gedrückt. Die Expansion des in der Schmelze gelösten Gases zerteilt diese in feine Tröpfchen.

Häufig werden Metallpulver nach der Herstellung einer Glühbehandlung unterworfen. Eine Reduktion der Pulver ist z.B. notwendig, wenn in Folge längerer oder ungünstiger Lagerung (erhöhte Feuchtigkeit und Temperatur) die Pulverteilchen mehr oder weniger oberflächlich oxidiert sind. Die Reduktion wird in herkömmlichen, auch für das Sintern genutzten Öfen vorgenommen. Am häufigsten werden als Reduktionsatmosphäre reiner Wasserstoff und Ammoniakspaltgas verwendet.

Aufgrund der hohen Oberflächenspannung von Metallen werden diese beim Verdüsen häufig zu sphärischen Partikeln verdüst, so dass kugelige Partikel vorliegen. Derartige Partikel haben eine Partikelgrößenverteilung, so dass sich in einer Schüttung eine Kugelpackung ergeben wird. Eine dichteste Kugelpackung ist die geometrische Anordnung unendlich vieler Kugeln gleicher Größe im dreidimensionalen Raum, in der Weise, dass diese einander nur berühren und nicht überlappen und dabei den verbleibenden Leerraum minimal lassen. Unterschieden wird in die kugeldichteste Kugelpackung und die hexagonal dichteste Kugelpackung.

Im technischen System, in denen eine Partikelgrößenverteilung vorhanden ist, werden diese idealen Zustände nur sehr schwer erreicht.

Zudem ist bei solchen Schüttungen immer problematisch, dass selbst wenn eine nachfolgende Verdichtung mit Rollen, Rakeln, Abstreifern oder dergleichen erfolgt, niemals ausgeschlossen werden kann, dass die Partikel tatsächlich eine dichteste Kugelpackung annehmen. Vielmehr ist in einem solchen pulverigen System damit zu rechnen, dass auch größere Defekte auftreten, zum Beispiel dadurch, dass sich Partikel gegenseitig ungünstig abstützen oder ungünstig aglomerieren und so größere Hohlräume bilden.

Da insbesondere das Pulverauftragssystem beim selektiven Laserschmelzen aber keinen Druck aufbaut oder nur eine geringe Kraft auf die Schichten ausübt, ist die Anordnung der einzelnen Pulverpartikel weitgehend dem Zufall überlassen. Im ungünstigsten Fall bilden sich Hohlräume, wobei sich Partikel in ungünstiger Weise aufeinander abstützen, so dass größere Hohlräume entstehen, die die Größe einzelner Partikel deutlich übersteigen.

Dies führt dazu, dass die gefertigten Bauteile immer eine geringere Dichte als Guss-, Schmiede- oder Fräsbauteile haben. Auch zeigen die Schichten nicht immer die gewünschten metallurgischen Eigenschaften und damit nicht die gewünschten Bauteileigenschaften.

Darüber hinaus ist von Nachteil, dass vorhandene Unregelmäßigkeiten immer auch Ausgangspunkte für die Rissbildung, insbesondere bei dynamischer Belastung dieser Bauteile sind.

Aufgabe der Erfindung ist es daher, ein Verfahren zu schaffen, mit dem derartige Bauteile zuverlässiger und in höherer Materialqualität gefertigt werden können.

Die Aufgabe wird mit einem Verfahren mit den Merkmalen des Anspruchs 1 gelöst.

Vorteilhafte Weiterbildungen sind in den Unteransprüchen gekennzeichnet.

Erfindungsgemäß wird während der Pulverzufuhr auf die Bauplattform bzw. der Pulverzufuhr auf bereits vorliegende Pulverbettschichten die Bauplattform mittels Ultraschallanregern in Schwingung versetzt. Hierdurch erfolgt eine Verdichtung des Pulvers, da sich die sphärischen Bestandteile in die jeweiligen Zwickel einrütteln können. Die Schwingungsanregung muss hierbei so erfolgen, dass sich im Pulverbett keine Schwingungsbilder ergeben, sondern das Pulverbett eine gleichmäßige Oberfläche behält. Um das Pulverniveau nicht unter die Höhe bereits erzeugter Geometrien fallen zu lassen, muss unter Umständen mit einem zu ermittelnden Pulverüberschuss gearbeitet werden.

Der Pulverüberschuss hängt von der Korngrößenverteilung und der absoluten Korngröße bzw. Korngrößengrenzen ab. Dieser kann in Versuchen empirisch ermittelt werden, ist jedoch auch mittels rechnerischer Verfahren ohne Weiteres ermittelbar.

Vorteilhafterweise kann die Anregung mit unterschiedlichen und Ultraschallfrequenzen erfolgen, um insbesondere unterschiedliche Korngrößen anzuregen.

Die erfindungsgemäße durch Ultraschall induzierte Bewegung der einzelnen Pulverpartikel im Pulverbett führt zu einer Verdichtung des Pulverbetts. Hierdurch wird die Anzahl der Hohlräume deutlich reduziert. Dies induziert eine deutlich homogenere Pulverschicht, die wiederum den vorausgegangenen ähnlicher ist, so dass nicht nur die Schichten in sich gleichmäßiger sind, sondern auch eine deutliche Vergleichmäßigung und Homogenisierung in vertikaler Richtung des Bauteils erzielt wird.

Erfindungsgemäß können klassische Ultraschallanreger verwendet werden. In besonders vorteilhafter Weise können so genannte Piezoshaker verwendet werden. Hierbei ist von Vorteil, dass diese kleinere Abmessungen haben.

Hierzu können die Frequenzen permanent variiert werden und unterschiedliche Frequenzen überlagert werden.

Erfindungsgemäß hat sich herausgestellt, dass eine Ultraschallanregung auch während des Einwirkens des Laserstrahls sich positiv auf die Bauteileigenschaften auswirkt, insbesondere erfolgt offensichtlich eine bessere Verteilung der Schmelze, wobei insbesondere die Kornbildung in der abkühlenden Schmelze positiv beeinflusst wird.

Darüber hinaus ist von Vorteil, dass eine Ultraschallanregung der Pulver auch zu einer Verbesserung der Wärmeleitung im Pulver und in der Schmelze führen kann, was zudem die Vergleichmäßigung fördert. Darüber hinaus kann vorteilhafterweise die Ultraschallbeeinflussung auch die Vorwärmung begünstigen.

## Patentansprüche

1. Verfahren zum generativen Fertigen von Bauteilen aus pulverförmigen Materialien, insbesondere Metall-, Keramik- oder Kunststoffpulvern, wobei auf ein Pulverbett mit einem energiereichen Strahl das Pulverbett zumindest teilbereichsweise aufschmelzend eingewirkt wird, wobei nach dem Aufschmelzen des Pulverbetts einer erste Schicht eine zweite Pulverschicht aufgebracht und diese ebenfalls zu mindestens teilbereichsweise aufgeschmolzen wird, wobei der Zyklus wiederholt wird, bis eine Anzahl gewünschter Schichten umgeschmolzen ist, insbesondere Verfahren zum selektiven Laserschmelzen von pulverförmigen Werkstoffen,
**dadurch gekennzeichnet, dass**
beim Einfüllen und/oder Einschütten einer nächsten Pulverschicht und/oder beim Einwirken des energiereichen Strahls auf das Pulverbett, das Pulverbett mit Ultraschallschwingungen beaufschlagt wird.

2. Verfahren nach Anspruch 1,
**dadurch gekennzeichnet, dass**
Ultraschallanreger und/oder piezokeramische Ultraschallerzeuger verwendet werden.

3. Verfahren nach einem der vorhergehenden Ansprüche,
**dadurch gekennzeichnet, dass**
Frequenzen von 20 kHz bis 400 kHz eingesetzt werden.

4. Verfahren nach einem der vorhergehenden Ansprüche,
**dadurch gekennzeichnet, dass**
Ultraschallanreger verwendet werden, die Ultraschall mit unterschiedlichen Frequenzen erzeugen, wobei die unterschiedlichen Frequenzen gleichzeitig oder sequenziell aufgebracht werden.
